# EUROPÄISCHE PATENTSCHRIFT

(11) **EP 3 176 556 B1**
(45) Veröffentlichungstag und Bekanntmachung des Hinweises auf die Patenterteilung: **06.06.2018**
(21) Anmeldenummer: 16200914.6
(22) Anmeldetag: 28.11.2016
(51) Int. Cl.: G01L 9/00, G01L 23/12, F02M 57/00

(54) **SENSORVORRICHTUNG UND KRAFTSTOFFINJEKTOR MIT EINER SENSORVORRICHTUNG**
SENSOR DEVICE AND FUEL INJECTOR WITH A SENSOR DEVICE
DISPOSITIF DE DÉTECTION ET INJECTEUR DE CARBURANT COMPRENANT UN DISPOSITIF DE DÉTECTION

(30) Priorität: 01.12.2015 DE 102015223902
(43) Veröffentlichungstag der Anmeldung: 07.06.2017
(73) Patentinhaber: ROBERT BOSCH GMBH, 70442 Stuttgart (DE)
(72) Erfinder: Beier, Marco, 71229 Leonberg (DE); Forke, Martin, 70499 Stuttgart (DE)

(56) Entgegenhaltungen:
- DE-A1- 19 813 756
- DE-A1-102014 209 324
- DE-U1-202006 002 561
- JP-A- 2001 170 393
- KR-A- 20030 009 848

## Beschreibung

### Stand der Technik

Die Erfindung betrifft eine Sensorvorrichtung zur Erfassung einer Bewegung eines Verformungsbereichs. Ferner betrifft die Erfindung einen Kraftstoffinjektor mit einer erfindungsgemäßen Sensorvorrichtung.

Bei Kraftstoffinjektoren ist es zur Ansteuerung der als Einspritzglied dienenden Düsennadel sinnvoll bzw. erforderlich, den exakten Schließzeitpunkt bzw. Öffnungszeitpunkt des Einspritzglieds möglichst genau erfassen zu können. So ist beispielsweise aus der nachveröffentlichten DE 10 2014 222 811 A1 und der DE 10 2014 209 324 A1 der Anmelderin bekannt, eine derartige Sensorvorrichtung unter Verwendung eines Piezoelements auszubilden. Bei dem bekannten Kraftstoffinjektor wird das Piezoelement unter Zwischenlage einer Klebstoffschicht an der Oberfläche eines Verformungsbereichs eines Injektorgehäuses des Kraftstoffinjektors befestigt. Mittels der Sensorvorrichtung lässt sich zumindest mittelbar der Druck in einer Versorgungsbohrung bzw. in einem Hochdruckraum des Kraftstoffinjektors ermitteln, woraus auf einen Schieß- bzw. Öffnungszeitpunkt des Einspritzglieds (Düsennadel) geschlossen werden kann. Die bekannte Sensorvorrichtung ist im Bereich einer Vertiefung des Injektorgehäuses angeordnet und mittels einer das Piezoelement an seiner der Klebstoffschicht gegenüberliegenden Stirnseite überdeckenden Einrichtung überdeckt. Die Einrichtung dient dazu, auf das Piezoelement eine axiale Vorspannkraft auszuüben, die zum einen die Zuverlässigkeit der Messeinrichtung bzw. des Piezoelements über die Lebensdauer des Kraftstoffinjektors gesehen erhöht, und zum anderen die Funktionalität des Piezoelements insofern verbessert, als dass auf das Piezoelement infolge der Deformation des Verformungsbereichs wirkende Zugspannungen reduziert werden. Hierzu ist die das Piezoelement teilweise überdeckende Einrichtung im Bereich der Vertiefung mit einer Schweißnaht mit dem Injektorgehäuse verbunden, um die benötigte axiale Vorspannkraft auf das Piezoelement zu erzeugen. Um einen Medienzutritt zu dem Piezoelement zu vermeiden, der die Funktionseigenschaften des Piezoelements, insbesondere über die Lebensdauer des Kraftstoffinjektors betrachtet, verschlechtern kann, ist es erforderlich, dass zwischen der Aufnahme bzw. der Vertiefung an dem Injektorgehäuse und der das Sensorelement teilweise überdeckenden Einrichtung eine vollständig umlaufende Schweißnaht ausgebildet ist, die den Bereich des Piezoelements abdichtet. Zusammengefasst ist die aus der genannten Schrift bekannte Sensorvorrichtung relativ komplex ausgebildet und es ist erforderlich, die Sensorvorrichtung zur Abdichtung sehr sorgfältig mit dem Injektorgehäuse zu verbinden. Darüber hinaus ist die Dauerhaltbarkeit von Klebstoffverbindungen über die Lebensdauer eines Kraftstoffinjektors betrachtet, welche typischerweise mit etwa 15 Jahren angenommen werden kann, insbesondere bei relativ ungünstigen Einsatzbedingungen als kritisch zu bewerten.

Aus der DE 10 2014 204 746 A1 der Anmelderin ist es darüber hinaus bekannt, eine Sensorvorrichtung zur Erfassung einer Bewegung des Einspritzglieds, die ebenfalls im Bereich einer Vertiefung einer Hochdruckversorgungsbohrung angeordnet ist, ohne die Verwendung von Klebstoff auszubilden. Zwar findet auch bei dieser bekannten Sensorvorrichtung ein Piezoelement Verwendung, jedoch ist dieses mittels einer Spannvorrichtung gegen die Oberfläche einer Abflachung des Injektorgehäuses axial vorgespannt. Nachteilig dabei ist zum einen, dass durch die Spannvorrichtung die Baugröße des Kraftstoffinjektors in Höhe der Spannvorrichtung vergrößert wird, und dass zum anderen ohne die Verwendung geeigneter Schutzmaßnahmen ein Medienzutritt zu dem Piezoelement möglich ist, was dessen Lebensdauer ggf. beeinträchtigen kann.

### Offenbarung der Erfindung

Ausgehend von dem dargestellten Stand der Technik liegt der Erfindung die Aufgabe zugrunde, eine Sensorvorrichtung zur Erfassung einer Bewegung eines Verformungsbereichs derart auszubilden, dass auf die Verwendung eines Piezoelements sowie einer Klebeverbindung verzichtet werden kann, wobei gleichzeitig ein geschützter Anbau der Sensorvorrichtung ermöglicht werden soll, derart, dass der Zutritt von Medien zu dem Bereich der Sensorvorrichtung verhindert wird. Weiterhin soll es das verwendete Meßprinzip erlauben, zuverlässig, schnell und mit hoher Signalstärke die Bewegung des zu detektierenden Verformungsbereichs erfassen zu können.

Diese Aufgabe wird erfindungsgemäß bei einer Sensorvorrichtung zur Erfassung der Bewegung eines Verformungsbereichs mit den Merkmalen des Anspruchs 1 gelöst.

Die Erfindung nutzt dabei - im Gegensatz zum genannten Stand der Technik - eine wenigstens ein Spulenelement und ein Magnetelement aufweisende Einrichtung zur Erzeugung einer elektrischen Spannung, wobei das wenigstens eine Spulenelement und das Magnetelement auf unterschiedlichen Trägerelementen angeordnet bzw. befestigt sind. Wesentlich für die Idee der Erfindung ist es, dass die Trägerelemente derart elastisch verformbar sind, dass sich deren gegenseitiger Abstand in einem Bereich, in dem das Magnetelement bzw. das wenigstens eine Spulenelement angeordnet ist, derart verändert, dass die genannten Elemente aufeinander zubewegt bzw. voneinander wegbewegt werden. Wesentlich dabei ist auch, dass dies mit einer relativ hohen Geschwindigkeit bzw. Amplitude erfolgt, da beide Trägerelemente an der Bewegung in entgegengesetzter Richtung teilnehmen. Somit lässt sich in besonders vorteilhafter Art und Weise eine besonders schnelle Erfassung der Bewegung des Verformungsbereichs mit einer relativ hohen Spannungsamplitude bewerkstelligen.

Vorteilhafte Weiterbildungen der erfindungsgemäßen Sensorvorrichtung sind in den Unteransprüchen aufgeführt.

In besonders bevorzugter konstruktiver Ausgestaltung der Trägerelemente, die eine besonders einfache Anbindung bzw. Befestigung sowohl des wenigstens einen Spulenelements als auch des Magnetelements sowie eine Befestigung der Trägerelemente im Bereich des zu detektierenden Verformungsbereichs ermöglicht, wird vorgeschlagen, dass die beiden Trägerelemente in Bezug zur Längsachse des wenigstens einen Spulenelements in einem schrägen Winkel angeordnete Abschnitte aufweisen, die vorzugsweise zwischen senkrecht zur Längsachse verlaufenden Abschnitten im Bereich der Befestigungsbereiche der Trägerelemente für den Verformungsbereich und in einem mittleren Bereich der Trägerelemente, in dem das wenigstens eine Spulenelement und das Magnetelement angeordnet sind, verlaufen. Wesentlich dabei ist, dass durch die Größe der Winkel der schrägen Abschnitte und deren Ausrichtung die Bewegungsrichtung und Bewegungsgeschwindigkeit zwischen dem Magnetelement und dem wenigstens einen Spulenelement beeinflusst werden kann.

Um bei der Bewegung der beiden Trägerelemente bzw. deren Verformung lediglich eine Bewegung des wenigstens einen Spulenelements sowie des Magnetelements in Richtung einer (gemeinsamen) Richtung bzw. Längsachse zu erzielen, jedoch nicht eine Querbewegung der genannten Elemente zueinander, ist es vorgesehen, dass die beiden Trägerelemente symmetrisch zu einer senkrecht zur Längsachse des wenigstens einen Spulenelements angeordneten Mittelebene und symmetrisch zur gemeinsamen Längsachse des wenigstens einen Spulenelements sowie des Magnetelements ausgebildet sind.

Um insbesondere einen ausreichenden Schutz der Einrichtung zur Erzeugung der elektrischen Spannung über eine längere Lebensdauer der Einrichtung zu erzielen und darüber hinaus den Zutritt von Medien, die die Funktionalität der Einrichtung zur Erzeugung der elektrischen Spannung beeinträchtigen, zu verhindern, ist es vorgesehen, dass die beiden Trägerelemente ein geschlossenes Gehäuse zur Aufnahme des Magnetelements und des wenigstens einen Spulenelements ausbilden.

Ein besonders kompakter Aufbau der Einrichtung zur Erzeugung der elektrischen Spannung lässt sich darüber hinaus erzielen, wenn das Magnetelement konzentrisch von dem wenigstens einen Spulenelement umgeben ist. Dadurch ist die Baugröße bzw. der Durchmesser der Einrichtung (lediglich) von der Baugröße des wenigstens einen Spulenelements bestimmt.

In einer konstruktiv bevorzugten Gestaltung, die hinsichtlich der Herstellungskosten besonders günstig realisierbar ist, ist es vorgesehen, dass ein einziges Spulenelement vorgesehen ist, und dass das Magnetelement in Bezug zur Längsachse des Spulenelements in einer Ebene außerhalb des Spulenelements angeordnet ist. Eine derartige Anordnung bewirkt bei einer Relativbewegung des Magnetelements zu dem Spulenelement zueinander eine relativ große Änderung der magnetischen Feldlinien des Magnetelements bzw. deren Richtung im Bereich des Spulenelements, so dass das in dem Spulenelement induzierte Spannungssignal sich besonders einfach auswerten lässt.

In alternativer Ausgestaltung, welche insbesondere besonders große Spannungssignale erzeugt, ist es vorgesehen, dass zwei Spulenelemente, dass die beiden Spulenelemente in Bezug zu einer gemeinsamen Längsachse axial voneinander beabstandet angeordnet sind, und dass das Magnetelement in einer Ebene zwischen den beiden Spulenelementen angeordnet ist. Eine derartige Anordnung des Magnetelements zwischen den beiden Spulenelementen bewirkt insbesondere, dass bei einer Relativbewegung des Magnetelements zu den beiden Spulenelementen in den beiden Spulenelementen jeweils Spannungen induziert werden, die sich gegenseitig addieren. Um die Addition der Spannungs signale bei Verwendung eines einzigen Spulendrahts für die beiden Spulenelemente zu ermöglichen, muss die Wicklungsrichtung an den beiden Spulenelementen unterschiedlich sein.

Die Erfindung umfasst auch einen Kraftstoffinjektor mit einer soweit beschriebenen erfindungsgemäßen Sensorvorrichtung, wobei die Sensorvorrichtung dazu ausgebildet ist, die Position eines Einspritzglieds bzw. einer Düsen nadel des Kraftstoffinjektors zumindest mittelbar zu erfassen. Eine derartige Erfassung dient in bevorzugter Art und Weise der Ansteuerung des Kraftstoffinjektors zur zeitgerechten Bewegung des Einspritzglieds.

In konstruktiv bevorzugter Anordnung einer derartigen Sensorvorrichtung an einem Kraftsloffinjektor ist es vorgesehen, dass die Sensorvorrichtung im Bereich einer Kraftstoffversorgungsbohrung an der Oberfläche eines Injektorgehäuses angeordnet ist, dass die Wandstärke des Injektorgehäuses im Bereich der Sensorvorrichtung bereichsweise reduziert ist, und dass die beiden Befestigungs bereiche der Trägerelemente außerhalb des in der Wandstärke reduzierten Bereichs angeordnet und mit dem Injektorgehäuse starr verbunden sind. Somit bildet der in der Wandstärke reduzierte Bereich des Injektorgehäuses den zu detektierenden Verformungsbereich aus.

Bei der soweit beschriebenen erfindungsgemäßen Sensorvorrichtung unter Verwendung zweier Trägerelemente ist es darüber hinaus von Vorteil, wenn die beiden Trägerelemente in dem in der Wandstärke des Injektorgehäuses reduzierten Bereich ohne Kontakt zum Injektorgehäuse angeordnet sind. Dadurch ist insbesondere keine Berührung bzw. kein Kontakt zwischen dem Injektorgehäuse und den Trägerelementen in dem Bereich möglich, in denen das Magnetelement bzw. das wenigstens eine Spulenelement angeordnet sind.

Weitere Vorteile, Merkmale und Einzelheiten der Erfindung ergeben sich aus der nachfolgenden Beschreibung bevorzugter Ausführungsbeispiele sowie anhand der Zeichnung.

### Diese zeigt in:

- Fig. 1: eine stark vereinfachte, teilweise geschnittene Seitenansicht eines erfindungsgemäßen Kraftstoffinjektors mit einer Sensorvorrichtung zur zumindest mittelbaren Erfassung des Kraftstoffdrucks im Kraftstoffinjektor,
- Fig. 2: eine erste Ausführungsform einer erfindungsgemäßen Sensorvorrichtung unter Verwendung eines einzigen Spulenelements in einer Schnittdarstellung,
- Fig. 3: eine gegenüber Fig. 2 modifizierte Sensorvorrichtung unter Verwendung zweier, axial voneinander beabstandet angeordneter Spulenelemente, ebenfalls in einer Schnittdarstellung und
- Fig. 4: die beiden Trägerelemente, die bei der Sensorvorrichtung gemäß der Fig. 2 und 3 verwendet werden, in einer Einzeldarstellung in einem unverformten und in einem verformten Zustand.
Gleiche Elemente bzw. Elemente mit gleicher Funktion sind in den Figuren mit den gleichen Bezugsziffern versehen.

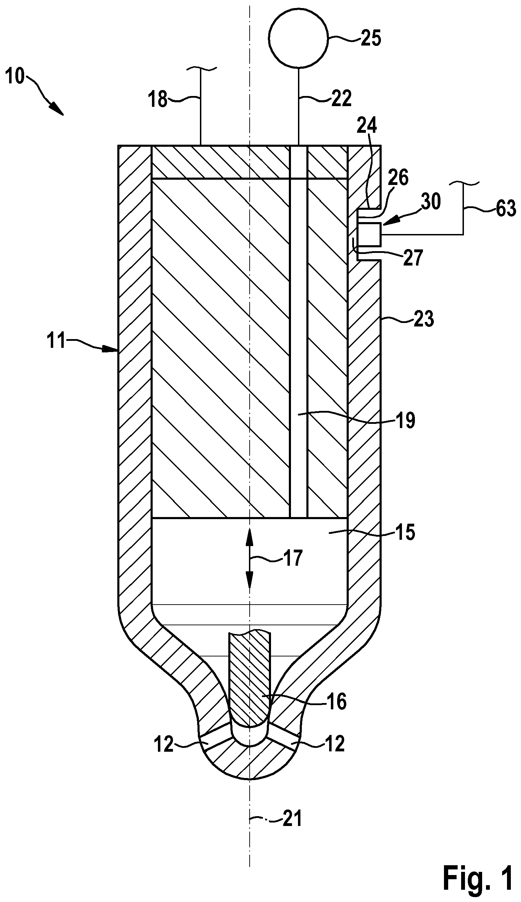

Der in der Fig. 1 stark vereinfacht dargestellte Kraftstoffinjektor 10 ist als sogenannter Common-Rail-Injektor ausgebildet, und dient dem Einspritzen von Kraftstoff in den nicht gezeigten Brennraum einer Brennkraftmaschine, insbesondere einer selbstzündenden Brennkraftmaschine.

Der Kraftstoffinjektor 10 weist ein im Wesentlichen aus Metall bestehendes, ggf. mehrteilig ausgebildetes Injektorgehäuse 11 auf, in dem auf der dem Brennraum der Brennkraftmaschine zugewandten Seite wenigstens eine, vorzugsweise mehrere Einspritzöffnungen 12 zum Einspritzen des Kraftstoffs eingeordnet sind. Innerhalb des Injektorgehäuses 11 bildet dieses einen Hochdruckraum 15 aus, in dem eine als Einspritzglied dienende Düsennadel 16 in Richtung des Doppelpfeils 17 hubbeweglich angeordnet ist. In der dargestellten, abgesenkten Stellung der Düsennadel 16 bildet diese zusammen mit der Innenwand des Hochdruckraums 15 bzw. des Injektorgehäuses 11 einen Dichtsitz aus, so dass die Einspritzöffnungen 12 zumindest mittelbar verschlossen sind, derart, dass das Einspritzen von Kraftstoff aus dem Hochdruckraum 15 in den Brennraum der Brennkraftmaschine vermieden wird. In der anderen, nicht dargestellten, von dem Dichtsitz abgehobenen Position der Düsennadel 16 gibt diese die Einspritzöffnungen 12 zum Einspritzen des Kraftstoffs in den Brennraum der Brennkraftmaschine frei. Die Bewegung der Düsennadel 16, insbesondere zum Freigeben der Einspritzöffnungen 12, erfolgt auf eine an sich bekannte Art und Weise mittels eines nicht dargestellten Aktuators, der über eine Spannungsversorgungsleitung 18 von einer Steuereinrichtung der Brennkraftmaschine ansteuerbar ist. Bei dem Aktuator kann es sich insbesondere um einen Magnetaktuator oder aber um einen Piezoaktuator handeln.

Die Versorgung des Hochdruckraums 15 mit unter Hochdruck (Systemdruck) stehendem Kraftstoff erfolgt über eine innerhalb des Injektorgehäuses 11 angeordnete bzw. in Bauteilen des Kraftstoffinjektors 10 ausgebildete Versorgungsbohrung 19, die insbesondere exzentrisch zur Längsachse 21 des Injektorgehäuses 11 in einem Randbereich des Kraftstoffinjektors 10, zumindest im Wesentlichen parallel zur Längsachse 21, verläuft. Die Versorgungsbohrung 19 ist darüber hinaus über einen nicht dargestellten Kraftstoffanschlussstutzen mit einer Kraftstoffleitung 22 verbunden, welche wiederum mit einem Kraftstoffspeicher 25 (Rail) gekoppelt ist.

In einem von den Einspritzöffnungen 12 axial relativ weit beabstandeten Bereich des Injektorgehäuses 11 ist in dessen Außenwand 23 beispielhaft eine sacklochförmige Vertiefung 24 ausgebildet, so dass die Wanddicke des Injektorgehäuses 11 im Bereich der Vertiefung 24 reduziert ist. Ergänzend wird erwähnt, dass anstelle einer sacklochförmigen Vertiefung 24 das Injektorgehäuse 11 auch eine Abflachung aufweisen kann, in deren Bereich die Wanddicke des Injektorgehäuses 11 reduziert ist.

Der eben ausgebildete Grund 26 der Vertiefung 24 bildet einen Teil eines Verformungsbereichs 27 aus. Dadurch wirkt der in der Versorgungsbohrung 19 augenblicklich herrschende Kraftstoffdruck in dem Injektorgehäuse 11 auch auf der der Vertiefung 24 abgewandten Seite. Dadurch, dass die Wanddicke des Injektorgehäuses 11 im Bereich der Vertiefung 24 reduziert ist, wirkt die Wand des Injektorgehäuses 11 auf der der Vertiefung 24 zugewandten Seite des Verformungsbereichs 27 in Art einer elastisch verformbaren Membran, wobei die Verformung, welche sich als konvexe Wölbung ausbildet, umso größer ist, je höher der augenblickliche Kraftstoffdruck in der Versorgungsbohrung 19 ist.

Zur Detektion des augenblicklichen Kraftstoffdrucks in der Versorgungsbohrung 19 und damit auch in dem Hochdruckraum 15, welcher als Indiz für die augenblickliche Stellung der Düsennadel 16 zur Ansteuerung der Düsennadel 16 verwendet wird, weist der Kraftstoffinjektor 10 eine Sensorvorrichtung 30 auf.

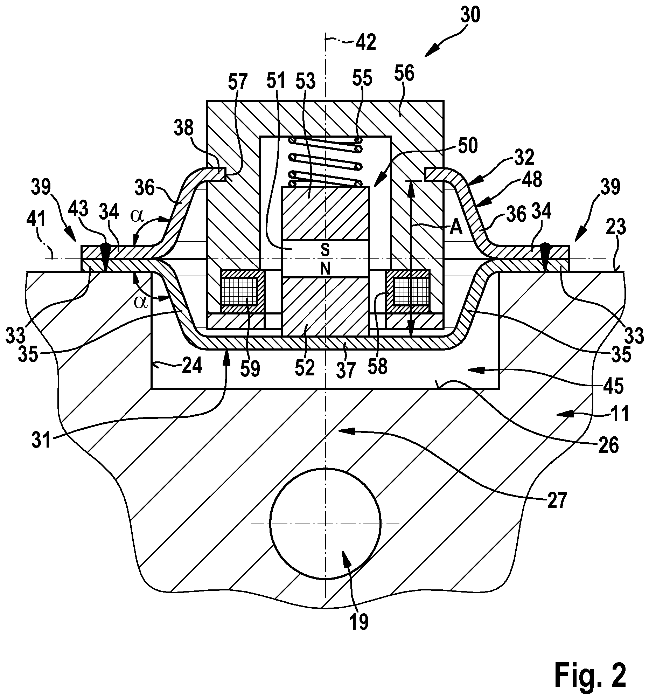

Die in der Fig. 2 in Einzeldarstellung im Schnitt gezeigte Sensorvorrichtung 30 weist zwei Trägerelemente 31, 32 auf. Die beiden Trägerelemente 31, 32 sind bereichsweise in Anlagekontakt zueinander angeordnet und weisen jeweils zwei gegenüberliegend angeordnete erste Abschnitte 33, 34, zwei gegenüberliegend angeordnete zweite Abschnitte 35, 36 sowie einen dritten Abschnitt 37, 38 auf. Die beiden ersten Abschnitte 33, 34 der beiden Trägerelemente 31, 32 sind in Anlagekontakt bzw. in unmittelbarer Überdeckung zueinander angeordnet und bilden jeweils einen Befestigungsbereich 39 zur Befestigung der Trägerelemente 31, 32 an dem ein Trägerbauteil ausbildenden Injektorgehäuse 11 aus. Die beiden dritten Abschnitte 37, 38 sind parallel versetzt zu den beiden ersten Abschnitten 33, 34 angeordnet, wobei im unbelasteten Zustand der Trägerelemente 31, 32 zwischen den dritten Abschnitten 37, 38 ein Abstand A ausgebildet ist. Die beiden zweiten Abschnitte 35, 36 der Trägerelemente 31, 32 verlaufen in Bezug zu den ersten Abschnitten 33, 34 jeweils in einem schrägen Winkel α, wobei der Winkel α mehr als 90° und weniger als 180°, im Ausführungsbeispiel etwa 135°, beträgt.

Die beiden Trägerelemente 31, 32 bzw. deren Abschnitte 33 bis 38 sind symmetrisch zu einer Mittelebene 41 sowie zu einer Symmetrieachse 42 ausgebildet. Insbesondere schneidet die Symmetrieachse 42 die Versorgungsbohrung 19 zentrisch. Während die zweiten Abschnitte 35, 36 und die dritten Abschnitte 37, 38 der Trägerelemente 31, 32 im Bereich der Vertiefung 24 angeordnet sind, sind die ersten Abschnitte 33, 34 jeweils mit dem Injektorgehäuse 11 im Bereich der Außenwand 23 verbunden, beispielsweise durch eine Laserschweißnaht 43. Wesentlich ist auch, dass zwischen dem Grund 26 der Vertiefung 24 und dem dem Grund 26 zugewandten ersten Trägerelement 31 im Bereich der Vertiefung 24 kein Anlagekontakt ausgebildet ist bzw. zwischen den genannten Elementen ein Spalt 45 ausgebildet ist.

Die beiden Trägerelemente 31, 32, welche insbesondere aus einem elastisch verformbaren Material wie Stahl oder Aluminium bestehen, bilden vorzugsweise ein geschlossenes Gehäuse 48 zur Aufnahme einer Einrichtung 50 zur Erzeugung einer elektrischen Spannung aus. Die Einrichtung 50 weist in einem Bereich, der in etwa mit der Mittelebene 41 zusammenfällt, ein Magnetelement 51 auf, dessen Nordpol N beispielhaft auf der dem Grund 26 zugewandten Seite angeordnet ist, während dessen Südpol S von dem Grund 26 wegragt. Das Magnetelement 51 ist unter Zwischenlage eines beispielhaft stiftförmig bzw. zylindrisch ausgebildeten Zwischenelements 52 mit dem ersten Trägerelement 31 im Bereich des dritten Abschnitts 37 verbunden. Hierbei ist das Magnetelement 51 insbesondere zentrisch zur Symmetrieachse 42 ausgerichtet. Auf der dem Zwischenelement 52 abgewandten Seite des Magnetelements 51 stützt sich unter Zwischenlage eines weiteren Elements 53 eine Druckfeder 55 ab, deren Federkraft sich auf der dem Element 53 abgewandten Seite am Grund einer topfartigen Spulenaufnahme 56 abstützt.

Die beispielsweise aus Kunststoff bestehende Spulenaufnahme 56 weist eine radial umlaufende Nut 57 auf, in deren Bereich der dritte Abschnitt 38 des zweiten Trägerelements 32 eingreift, um die Spulenaufnahme 56 zu halten. Durch die Federkraft der Druckfeder 55 wird die Spulenaufnahme 56 von dem ersten Trägerelement 31 weggedrückt.

Auf der dem Grund 26 zugewandten Seite der Spulenaufnahme 56 ist innerhalb eines Spulenträgers 58 eine Magnetspule 59 angeordnet, die ebenfalls Bestandteil der Einrichtung 50 ist und die mit dem Magnetelement 51 zusammenwirkt. Wesentlich dabei ist, dass die Magnetspule 59 in einem unbelasteten Zustand der Sensorvorrichtung 30 in einer Ebene unterhalb der Mittelebene 41 bzw. des Magnetelements 51 auf der dem Grund 26 zugewandten Seite angeordnet ist. Die Längsachse der Magnetspule 59 fällt mit der Symmetrieachse 42 des Gehäuses 48 zusammen, derart, dass das Magnetelement 51 von der Magnetspule 59 konzentrisch umgeben ist.

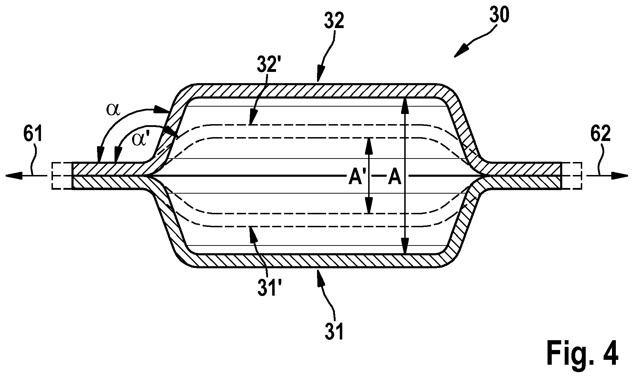

Mit Bezug auf die Fig. 4 wird erläutert, dass sich der Abstand A zwischen den beiden dritten Abschnitten 37, 38 der beiden Trägerelemente 31, 32 aus dem in der Fig. 2 dargestellten Zustand auf ein Maß A' (gestrichelte Darstellung in der Fig. 4) verringert, wenn die beiden Trägerelemente 31, 32 in Richtung der in der Fig. 4 dargestellten Pfeile 61, 62 voneinander wegbewegt werden. Eine derartige Bewegung der Trägerelemente 31, 32 im Bereich der ersten Abschnitte 33, 34 findet dann statt, wenn aufgrund einer (elastischen) Deformation des Verformungsbereichs 27 eine Deformation des Injektorgehäuses 11 an deren Befestigungsbereichen 39 am Injektorgehäuse 11 erfolgt, welche dazu führt, dass die beiden Trägerelemente 31, 32 im Bereich der Befestigungsbereiche 39 zu der Außenwand 23 des Injektorgehäuses 11 voneinander wegbewegt werden. Die Verringerung des Abstandes A' zwischen den beiden Trägerelementen 31, 32 geht einher mit einer Vergrößerung des Winkels a, welcher sich auf einen Winkel α' vergrößert. Gleichzeitig einher mit der Verringerung des Abstands A' geht auch eine Relativbewegung des Magnetelements 51 zu der Magnetspule 59. Diese Relativbewegung induziert in der Magnetspule 59 eine elektrische Spannung, welche über eine in der Fig. 1 erkennbare Anschlussleitung 63 beispielsweise einer Auswerteschaltung zugeführt wird.

Beim Betrieb des Kraftstoffinjektors 10 verformt sich der Verformungsbereich 27 des Injektorgehäuses 11 in Abhängigkeit des in der Versorgungsbohrung 19 herrschenden Kraftstoffdrucks elastisch nach außen. Diese Verformung bewirkt, wie oben erläutert, eine Vergrößerung des Abstandes zwischen den beiden ersten Abschnitten 33, 34 der Trägerelemente 31, 32 im Bereich der Befestigungsbereiche 39. Die dadurch von der Einrichtung 50 erzeugte elektrische Spannung kann dazu verwendet werden, zumindest mittelbar auf die Stellung der Düsennadel 16 in den Injektorgehäuse 11 zu schließen.

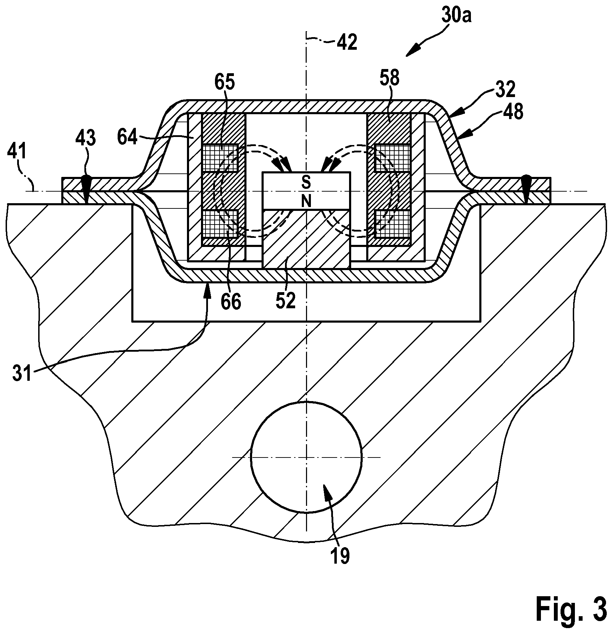

Die in der Fig. 3 gezeigte Sensorvorrichtung 30a unterscheidet sich von der Sensorvorrichtung 30 im Wesentlichen dadurch, dass die Spulenaufnahme 64, die vollständig zwischen den beiden Trägerelementen 31, 32 aufgenommen ist, dazu ausgebildet ist, zwei Magnetspulen 65, 66 aufzunehmen. Die beiden axial voneinander beabstandeten Magnetspulen 65, 66 sind bei Verwendung eines einzigen Spulendrahtes in unterschiedlicher Richtung bewickelt. Weiterhin ist die Anordnung der Magnetspulen 65, 66 symmetrisch zur Mittelebene 41. Durch die unterschiedliche Richtung der Drahtwicklungen in den Magnetspulen 65, 66 wird bei einer Relativbewegung des Magnetelements 51 zu den Magnetspulen 65, 66 in diesen jeweils eine Spannung erzeugt, deren Spannungssignale addiert werden können und somit ein gegenüber der Sensorvorrichtung 30 erhöhtes Spannungssignal erzeugen.

Die soweit beschriebenen Sensorvorrichtungen 30, 30a können in vielfältiger Art und Weise abgewandelt bzw. modifiziert werden, ohne vom Erfindungsgedanken abzuweichen. Insbesondere wird auch darauf hingewiesen, dass der Einsatz einer soweit beschriebenen Sensorvorrichtung 30, 30a nicht auf die Verwendung in Kraftstoffinjektoren 10 bzw. zur Detektion der Stellung der Düsennadel 16 beschränkt sein soll.

## Patentansprüche

1. Sensorvorrichtung (30; 30a) zur Erfassung der Bewegung eines Verformungsbereichs (27), mit einer Einrichtung (50) zur Erzeugung einer elektrischen Spannung, wobei die Einrichtung (50) zumindest ein Magnetelement (51) und wenigstens ein relativ zum Magnetelement (51) beweglich angeordnetes, mit dem Magnetelement (51) zusammenwirkendes Spulenelement (59; 65, 66) aufweist, wobei das Magnetelement (51) an einem ersten Trägerelement (31) und das wenigstens eine Spulenelement (59; 65, 66) an einem zweiten Trägerelement (32) befestigt ist, wobei die beiden Trägerelemente (31; 32) ein Gehäuse zur Aufnahme der Einrichtung (50) bilden und die beiden Trägerelemente (31, 32) in Bezug zu einer senkrecht zu einer Längsachse (42) des wenigstens einen Spulenelements (59; 65, 66) verlaufenden Richtung auf gegenüberliegenden Seiten des wenigstens einen Spulenelements (59; 65, 66) jeweils einen Befestigungsbereich (39) zur Befestigung an einem Injektorgehäuse (11) aufweisen, welches Injektorgehäuse (11) den Verformungsbereich (27) ausbildet, wobei die beiden Trägerelemente (31, 32) in einem Bereich zwischen den Befestigungsbereichen (39) elastisch verformbar sind, und wobei sich bei der Verformung der Trägerelemente (31, 32) die Position zwischen dem Magnetelement (51) und dem wenigstens einen Spulenelement (59; 65, 66) ändert.

2. Sensorvorrichtung nach Anspruch 1,
**dadurch gekennzeichnet,**
**dass** die beiden Trägerelemente (31, 32) in Bezug zur Längsachse (42) des wenigstens eine Spulenelements (59; 65, 66) in einem schrägen Winkel (α) angeordnete Abschnitte (35, 36) aufweisen, die vorzugsweise zwischen senkrecht zur Längsachse (42) verlaufenden Abschnitten (33, 34, 37, 38) im Bereich der Befestigungsbereiche (39) und einem mittleren Bereich der Trägerelemente (31, 32), in dem das wenigstens eine Spulenelement (59; 65, 66) und das Magnetelement (51) angeordnet sind, verlaufen.

3. Sensorvorrichtung nach Anspruch 2,
**dadurch gekennzeichnet,**
**dass** die beiden Trägerelemente (31, 32) symmetrisch zu einer senkrecht zur Längsachse (42) des wenigstens einen Spulenelements (59; 65, 66) angeordneten Mittelebene (41) und symmetrisch zur Längsachse (42) ausgebildet sind

4. Sensorvorrichtung nach einem der Ansprüche 1 bis 3,
**dadurch gekennzeichnet,**
**dass** die beiden Trägerelemente (31, 32) ein geschlossenes Gehäuse (48) zur Aufnahme des Magnetelements (51) und des wenigstens einen Spulenelements (59; 65, 66) ausbilden.

5. Sensorvorrichtung nach einem der Ansprüche 1 bis 4,
**dadurch gekennzeichnet,**
**dass** das Magnetelement (51) konzentrisch zu dem wenigstens einen Spulenelement (59; 65, 66) angeordnet ist.

6. Sensorvorrichtung nach einem der Ansprüche 1 bis 5,
**dadurch gekennzeichnet,**
**dass** ein einziges Spulenelement (59) vorgesehen ist, und dass das Magnetelement (51) in Bezug zu einer senkrecht zur Längsachse (42) des Spulenelements (59) verlaufenden Richtung in einer Ebene außerhalb des Spulenelements (59) angeordnet ist.

7. Sensorvorrichtung nach einem der Ansprüche 1 bis 5,
**dadurch gekennzeichnet,**
**dass** zwei Spulenelemente (65, 66) vorgesehen sind, dass die beiden Spulenelemente (65, 66) in Bezug zu einer gemeinsamen Längsachse (42) axial voneinander beabstandet angeordnet sind, und dass das Magnetelement (51) in einer Ebene zwischen den beiden Spulenelementen (65, 66) angeordnet ist.

8. Kraftstoffinjektor (10) mit einer Sensorvorrichtung (30; 30a) nach einem der Ansprüche 1 bis 7.

9. Kraftstoffinjektor nach Anspruch 8,
**dadurch gekennzeichnet,**
**dass** die Sensorvorrichtung (30; 30a) im Bereich einer Kraftstoffversorgungsbohrung (19) an einer Oberfläche (23) des Injektorgehäuses (11) angeordnet ist, dass die Wandstärke des Injektorgehäuses (11) im Bereich der Sensorvorrichtung (30; 30a) bereichsweise reduziert ist und dadurch den zu detektierenden Verformungsbereich (27) ausbildet, und dass die beiden Befestigungsbereiche (39) außerhalb des in der Wandstärke reduzierten Bereichs angeordnet und mit dem Injektorgehäuse (11) starr verbunden sind.

10. Kraftstoffinjektor nach Anspruch 9,
**dadurch gekennzeichnet,**
**dass** die beiden Trägerelemente (31, 32) in dem in der Wandstärke des Injektorgehäuses (11) reduzierten Bereich ohne Kontakt zum Injektorgehäuse (11) angeordnet sind.

## Claims

1. Sensor device (30; 30a) for detecting the movement of a deformation region (27), having a device (50) for generating an electrical voltage, wherein the device (50) has at least one magnet element (51) and at least one coil element (59; 65, 66) which is arranged so as to be movable relative to the magnet element (51) and which interacts with the magnet element (51), wherein the magnet element (51) is fastened to a first carrier element (31) and the at least one coil element (59; 65, 66) is fastened to a second carrier element (32), wherein the two carrier elements (31; 32) form a housing for accommodating the device (50), and the two carrier elements (31, 32) have, on opposite sides of the at least one coil element (59; 65, 66) with respect to a direction running perpendicular to a longitudinal axis (42) of the at least one coil element (59; 65, 66), in each case one fastening region (39) for fastening to an injector housing (11), which injector housing (11) forms the deformation region (27), wherein the two carrier elements (31, 32) are elastically deformable in a region between the fastening regions (39), and wherein, during the deformation of the carrier elements (31, 32), the position between the magnet element (51) and the at least one coil element (59; 65, 66) changes.

2. Sensor device according to Claim 1,
**characterized**
**in that** the two carrier elements (31, 32) have sections (35, 36) arranged at an oblique angle (α) with respect to the longitudinal axis (42) of the at least one coil element (59; 65, 66), said sections preferably running between sections (33, 34, 37, 38), which run perpendicular to the longitudinal axis (42), in the region of the fastening regions (39) and a central region of the carrier elements (31, 32), in which central region the at least one coil element (59; 65, 66) and the magnet element (51) are arranged.

3. Sensor device according to Claim 2,
**characterized**
**in that** the two carrier elements (31, 32) are formed symmetrically with respect to a central plane (41) arranged perpendicular to the longitudinal axis (42) of the at least one coil element (59; 65, 66), and symmetrically with respect to the longitudinal axis (42).

4. Sensor device according to one of Claims 1 to 3,
**characterized**
**in that** the two carrier elements (31, 32) form a closed housing (48) for accommodating the magnet element (51) and the at least one coil element (59; 65, 66).

5. Sensor device according to one of Claims 1 to 4,
**characterized**
**in that** the magnet element (51) is arranged concentrically with respect to the at least one coil element (59; 65, 66).

6. Sensor device according to one of Claims 1 to 5,
**characterized**
**in that** a single coil element (59) is provided, and in that the magnet element (51) is, with respect to a direction running perpendicular to the longitudinal axis (42) of the coil element (59), arranged in a plane outside the coil element (59) .

7. Sensor device according to one of Claims 1 to 5,
**characterized**
**in that** two coil elements (65, 66) are provided, in that the two coil elements (65, 66) are, with respect to a common longitudinal axis (42), arranged axially spaced apart from one another, and in that the magnet element (51) is arranged in a plane between the two coil elements (65, 66).

8. Fuel injector (10) having a sensor device (30;
30a) according to one of Claims 1 to 7.

9. Fuel injector according to Claim 8,
**characterized**
**in that** the sensor device (30; 30a) is arranged, in the region of a fuel supply bore (19), on a surface (23) of the injector housing (11), in that the wall thickness of the injector housing (11) is reduced in regions in the region of the sensor device (30; 30a) and thus forms the deformation region (27) on which detection is to be performed, and in that the two fastening regions (39) are arranged outside the region of reduced wall thickness and are rigidly connected to the injector housing (11).

10. Fuel injector according to Claim 9,
**characterized**
**in that** the two carrier elements (31, 32) are arranged in the region of reduced wall thickness of the injector housing (11), without making contact with the injector housing (11).

## Revendications

1. Dispositif de capteur (30 ; 30a) pour détecter le mouvement d'une zone de déformation (27), comprenant un dispositif (50) pour générer une tension électrique, le dispositif (50) présentant au moins un élément magnétique (51) et au moins un élément de bobine (59 ; 65, 66) disposé de manière déplaçable par rapport à l'élément magnétique (51) et coopérant avec l'élément magnétique (51), l'élément magnétique (51) étant fixé à un premier élément de support (31) et l'au moins un élément de bobine (59 ; 65, 66) étant fixé à un deuxième élément de support (32), les deux éléments de support (31 ; 32) formant un boîtier pour recevoir le dispositif (50) et les deux éléments de support (31, 32) présentant chacun une zone de fixation (39) pour la fixation à un boîtier d'injecteur (11), sur des côtés opposés de l'au moins un élément de bobine (59 ; 65, 66), par rapport à une direction s'étendant perpendiculairement à un axe longitudinal (42) de l'au moins un élément de bobine (59 ; 65, 66), lequel boîtier d'injecteur (11) formant la zone de déformation (27), les deux éléments de support (31, 32) étant déformables élastiquement dans une région entre les zones de fixation (39) et la position entre l'élément magnétique (51) et l'au moins un élément de bobine (59 ; 65, 66) variant lors de la déformation des éléments de support (31, 32).

2. Dispositif de capteur selon la revendication 1,
**caractérisé en ce que**
les deux éléments de support (31, 32) présentent des portions (35, 36) disposées suivant un angle oblique (α) par rapport à l'axe longitudinal (42) de l'au moins un élément de bobine (59 ; 65, 66), lesquelles s'étendent de préférence entre des portions (33, 34, 37, 38) s'étendant perpendiculairement à l'axe longitudinal (42) dans la région des zones de fixation (39) et une région centrale des éléments de support (31, 32) dans laquelle sont disposés l'au moins un élément de bobine (59 ; 65, 66) et l'élément magnétique (51).

3. Dispositif de capteur selon la revendication 2,
**caractérisé en ce que**
les deux éléments de support (31, 32) sont réalisés symétriquement par rapport à un plan médian (41) disposé perpendiculairement à l'axe longitudinal (42) de l'au moins un élément de bobine (59 ; 65, 66) et symétriquement par rapport à l'axe longitudinal (42).

4. Dispositif de capteur selon l'une quelconque des revendications 1 à 3,
**caractérisé en ce que**
les deux éléments de support (31, 32) constituent un boîtier fermé (48) pour recevoir l'élément magnétique (51) et l'au moins un élément de bobine (59 ; 65, 66).

5. Dispositif de capteur selon l'une quelconque des revendications 1 à 4,
**caractérisé en ce que**
l'élément magnétique (51) est disposé concentriquement par rapport à l'au moins un élément de bobine (59 ; 65, 66).

6. Dispositif de capteur selon l'une quelconque des revendications 1 à 5,
**caractérisé en ce**
**qu'**un élément de bobine unique (59) est prévu, et **en ce que** l'élément magnétique (51) est disposé, par rapport à une direction s'étendant perpendiculairement à l'axe longitudinal (42) de l'élément de bobine (59), dans un plan à l'extérieur de l'élément de bobine (59).

7. Dispositif de capteur selon l'une quelconque des revendications 1 à 5,
**caractérisé**
**en ce que** deux éléments de bobine (65, 66) sont prévus, **en ce que** les deux éléments de bobine (65, 66) sont disposés axialement à distance l'un de l'autre par rapport à un axe longitudinal commun (42), et **en ce que** l'élément magnétique (51) est disposé dans un plan entre les deux éléments de bobine (65, 66).

8. Injecteur de carburant (10) comprenant un dispositif de capteur (30 ; 30a) selon l'une quelconque des revendications 1 à 7.

9. Injecteur de carburant selon la revendication 8,
**caractérisé en ce que**
le dispositif de capteur (30 ; 30a) est disposé dans la zone d'un alésage d'alimentation en carburant (19) au niveau d'une surface (23) du boîtier d'injecteur (11), **en ce que** l'épaisseur de paroi du boîtier d'injecteur (11) est réduite en partie dans la région du dispositif de capteur (30 ; 30a) et constitue de ce fait la zone de déformation à détecter (27), et **en ce que** les deux zones de fixation (39) sont disposées à l'extérieur de la zone d'épaisseur de paroi réduite et sont connectées rigidement au boîtier d'injecteur (11).

10. Injecteur de carburant selon la revendication 9,
**caractérisé en ce que**
les deux éléments de support (31, 32) sont disposés dans la zone d'épaisseur de paroi réduite du boîtier d'injecteur (11) sans contact avec le boîtier d'injecteur (11).
